# FASCICULE DE BREVET EUROPEEN

(11) **EP 4 366 987 B1**
(45) Date de publication et mention de la délivrance du brevet: **11.03.2026**
(21) Numéro de dépôt: 22733707.8
(22) Date de dépôt: 02.06.2022
(51) Int. Cl.: B60R 16/04, H01M 50/20

(54) **ENSEMBLE DE FIXATION**
BEFESTIGUNGSANORDNUNG
FASTENING ASSEMBLY

(30) Priorité: 05.07.2021 FR 2107231
(43) Date de publication de la demande: 15.05.2024
(73) Titulaire: Stellantis Auto SAS, 78300 Poissy (FR)
(72) Inventeur: FOURNIAT, Philippe, 75014 PARIS 14 (FR); KIPFER, Ghislain, 90400 BERMONT (FR); GARNIER, Alexis, 38450 Vif (FR)
(74) Mandataire: ESIP
(86) Numéro de dépôt international: PCT/FR2022/051044
(87) Numéro de publication internationale: WO 2023/281173

(56) Documents cités:
- EP-A2- 0 722 880
- DE-A1- 10 214 048

## Description

### Domaine technique

L'invention se rapporte au domaine technique des ensembles de fixation comportant une agrafe fixée dans un orifice d'une tôle d'un élément de carrosserie d'un véhicule.

L'invention trouve notamment son application dans la fixation d'une batterie alimentant un boîtier de télécommunication.

### État de l'art

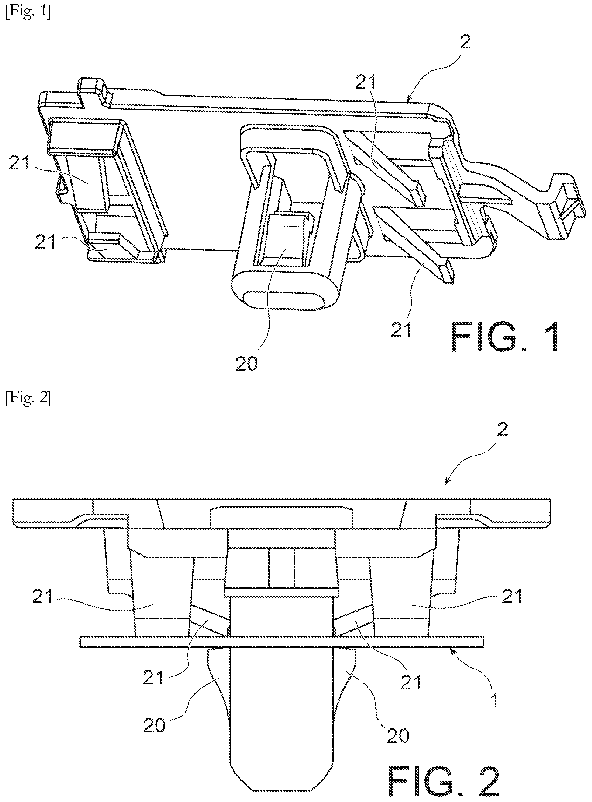

Comme illustré à la figure 2, un ensemble de fixation connu de l'état de la technique comporte :
- un élément de carrosserie d'un véhicule, comprenant une tôle possédant un orifice ; la tôle présentant une épaisseur constante ;
- une agrafe, comprenant des moyens d'emboîtage élastique agencés pour fixer l'agrafe dans l'orifice de la tôle, l'agrafe étant destinée à recevoir une batterie ;

la tôle présentant une interface, en contact avec l'agrafe lorsque l'agrafe est fixée dans l'orifice de la tôle, l'interface étant destinée à présenter une épaisseur avec une valeur comprise dans une gamme de valeurs données ;
l'épaisseur constante de la tôle ayant une valeur située dans la gamme de valeurs données.

Un tel ensemble de fixation de l'état de la technique n'est pas entièrement satisfaisant dans la mesure où les architectes « véhicule » doivent trouver un endroit de l'élément de carrosserie où l'épaisseur constante de la tôle a une valeur située dans la gamme de valeurs données, ce qui n'est pas toujours une chose aisée, en particulier lorsque la gamme de valeurs données est restreinte (par exemple [1,35 mm ; 1,55 mm]).

Une solution possible pour contourner ce problème est de prévoir une pièce de support dédiée pour fixer l'agrafe sur l'élément de carrosserie. Cette solution engendre des coûts supplémentaires importants (étude, matière, gestion, assemblage etc.). Le document DE10214048A1 montre un ensemble de fixation comportant un élément de carrosserie d'un véhicule, comprenant une tôle possédant un orifice; la tôle présentant une épaisseur constante; une agrafe, comprenant des moyens agencés pour fixer l'agrafe dans l'orifice de la tôle, l'agrafe étant destinée à recevoir une batterie. Le document EP0722880A2 montre des moyens d'emboîtage élastique agencés pour fixer un agrafe dans un orifice d'une tôle.

### Exposé de l'invention

L'invention vise à remédier en tout ou partie aux inconvénients précités. A cet effet, l'invention a pour objet des ensembles de fixation avec les caractéristiques des revendications 1 et 2.

Ainsi, un tel ensemble de fixation selon l'invention permet, grâce aux zones embouties, d'ajuster l'épaisseur de l'interface de manière à garantir l'épaisseur de l'interface, c'est-à-dire que l'interface présente une épaisseur avec une valeur comprise dans une gamme de valeurs données. La gamme de valeurs données est prédéterminée de manière à assurer une stabilité satisfaisante de l'agrafe sur la tôle.

Un tel ensemble de fixation permet de s'affranchir d'une pièce de support dédiée, et de se libérer de la contrainte de la valeur de l'épaisseur constante de la tôle vis-à-vis de la gamme de valeurs données.

Ainsi, un avantage procuré est de garantir l'épaisseur de l'interface pour des tôles minces. Les motifs saillants forment des surfaces d'appui pour les éléments élastiquement déformables.

Ainsi, un avantage procuré est de garantir l'épaisseur de l'interface pour des tôles épaisses. Les motifs creux forment des surfaces d'appui pour les éléments élastiquement déformables.

Selon une caractéristique de l'invention, les moyens d'emboîtage élastique comportent :
- des ergots élastiquement déformables, agencés pour pénétrer dans l'orifice de la tôle ;
- des pattes élastiquement déformables, agencées pour venir en appui contre la tôle.

Ainsi, un avantage procuré est de conférer une excellente stabilité de l'agrafe sur la tôle. La gamme de valeurs données est prédéterminée de manière à assurer une mise en tension satisfaisante de l'agrafe entre les ergots et les pattes.

Selon une caractéristique de l'invention, l'ensemble de fixation comporte une batterie montée sur l'agrafe, la batterie étant de préférence une batterie pour alimenter un boîtier de télécommunication.

Selon une caractéristique de l'invention, l'épaisseur constante de la tôle a une valeur supérieure ou égale à 0,65 mm et inférieure ou égale à 2,8 mm.

Selon une caractéristique de l'invention, la gamme de valeurs données présente :
- une borne inférieure égale à 1,35 mm, et
- une borne supérieure égale à 3 mm.

L'invention a également pour objet un véhicule, comportant un ensemble de fixation conforme à l'invention.

Selon une caractéristique de l'invention, le véhicule comporte une vitre de custode ; et l'élément de carrosserie est agencé sous la vitre de custode.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est une vue schématique en perspective, illustrant une agrafe destinée à fixer une batterie.
Figure 2 est une vue schématique de dessus, illustrant un ensemble de fixation de l'état de la technique.
Figure 3 est une vue schématique de dessus, illustrant un ensemble de fixation selon l'invention pour une tôle mince.
Figure 4 est une vue schématique de dessus, illustrant un ensemble de fixation selon l'invention pour une tôle épaisse.

Il est à noter que les dessins décrits ci-avant sont schématiques, et ne sont pas nécessairement à l'échelle par souci de lisibilité et pour en simplifier leur compréhension.

### Exposé détaillé des modes de réalisation

Les éléments identiques ou assurant la même fonction porteront les mêmes références pour les différents modes de réalisation, par souci de simplification.

### Ensemble de fixation

Un objet de l'invention est un ensemble de fixation, comportant :
- un élément de carrosserie d'un véhicule, comprenant une tôle 1 possédant un orifice ; la tôle 1 présentant une épaisseur constante :
- une agrafe 2 (bien visible à la figure 1), comprenant des moyens d'emboîtage élastique agencés pour fixer l'agrafe 2 dans l'orifice de la tôle 1, l'agrafe 2 étant destinée à recevoir une batterie (non illustrée) ;

la tôle 1 présentant une interface, en contact avec l'agrafe 2 lorsque l'agrafe 2 est fixée dans l'orifice de la tôle 1, l'interface étant destinée à présenter une épaisseur avec une valeur comprise dans une gamme de valeurs données ;
remarquable en ce que :
   - l'épaisseur constante de la tôle 1 a une valeur située en dehors de la gamme de valeurs données ;
   - la tôle 1 comporte des zones embouties 10 agencées pour déformer l'interface de sorte que l'interface présente une épaisseur avec une valeur comprise dans la gamme de valeurs données.

### Agrafe

Les moyens d'emboîtage élastique comportent avantageusement des éléments 20 élastiquement déformables, agencés pour pénétrer dans l'orifice de la tôle 1.

Les moyens d'emboîtage élastique comportent avantageusement:
- des ergots 20 élastiquement déformables, agencés pour pénétrer dans l'orifice de la tôle 1 ;
- des pattes 21 élastiquement déformables, agencées pour venir en appui contre la tôle 1.

L'agrafe 2 peut comporter une semelle de support, sur laquelle sont formés les ergots 20 et les pattes 21.

### Tôle

L'orifice de la tôle 1 est avantageusement oblong.

L'épaisseur constante de la tôle 1 a de préférence une valeur supérieure ou égale à 0,65 mm. L'épaisseur constante de la tôle 1 a de préférence une valeur inférieure ou égale à 2,8 mm.

La gamme de valeurs données pour l'interface peut présenter :
- une borne inférieure égale à 1,35 mm, et
- une borne supérieure égale à 3 mm.

En d'autres termes, la gamme de valeurs données pour l'interface peut être comprise dans l'intervalle [1,35 mm ; 3 mm], par exemple [1,35 mm ; 1,55 mm].

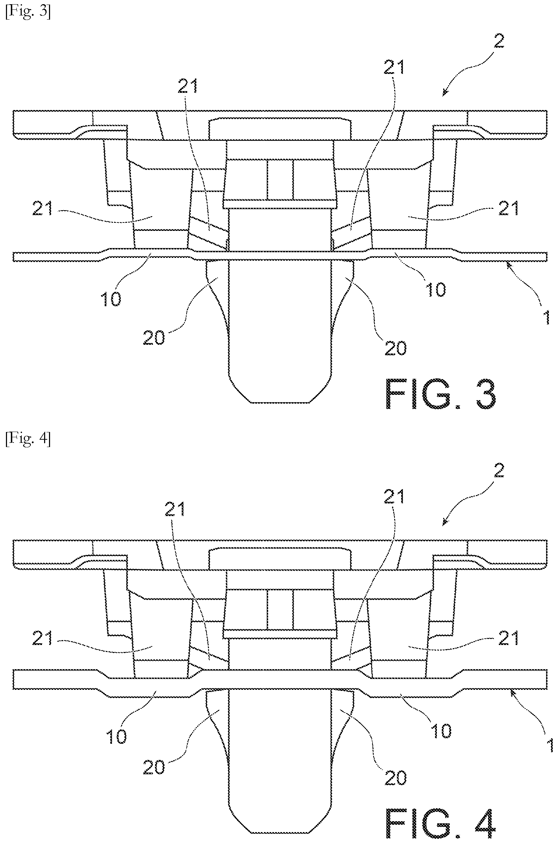

Selon un mode de réalisation illustré à la figure 3, lorsque l'épaisseur constante de la tôle 1 a une valeur située en deçà de la gamme de valeurs données, les zones embouties 10 sont avantageusement agencées pour déformer l'interface de sorte que :
- l'interface comporte des motifs saillants et des motifs creux, et
- les éléments 20 élastiquement déformables reposent sur les motifs saillants lorsque l'agrafe 2 est fixée dans l'orifice de la tôle 1.

Les zones embouties 10 permettent de décaler les surfaces d'appui formées par les motifs saillants.

Selon un mode de réalisation illustré à la figure 4, lorsque l'épaisseur constante de la tôle 1 a une valeur située au-delà de la gamme de valeurs données, les zones embouties 10 sont avantageusement agencées pour déformer l'interface de sorte que :
- l'interface comporte des motifs saillants et des motifs creux, et
- les éléments 20 élastiquement déformables reposent sur les motifs creux lorsque l'agrafe 2 est fixée dans l'orifice de la tôle 1.

Les zones embouties 10 permettent de décaler les surfaces d'appui formées par les motifs creux.

### Batterie

L'ensemble de fixation comporte avantageusement une batterie montée sur l'agrafe 2. La batterie est de préférence une batterie pour alimenter un boîtier de télécommunication. La batterie peut former une alimentation électrique de secours.

### Véhicule

Un objet de l'invention est un véhicule, comportant un ensemble de fixation conforme à l'invention.

Le véhicule comporte une vitre de custode. L'élément de carrosserie est avantageusement agencé sous la vitre de custode.

## Revendications

1. Ensemble de fixation, comportant :
- un élément de carrosserie d'un véhicule, comprenant une tôle (1) possédant un orifice ; la tôle (1) présentant une épaisseur constante ;
- une agrafe (2), comprenant des moyens d'emboîtage élastique agencés pour fixer l'agrafe (2) dans l'orifice de la tôle (1), l'agrafe (2) étant destinée à recevoir une batterie ;
la tôle (1) présentant une interface, en contact avec l'agrafe (2) lorsque l'agrafe (2) est fixée dans l'orifice de la tôle (1), l'interface étant destinée à présenter une épaisseur avec une valeur comprise dans une gamme de valeurs données ;
**caractérisé en ce que** :
- l'épaisseur constante de la tôle (1) a une valeur située en dehors de la gamme de valeurs données ;
- la tôle (1) comporte des zones embouties (10) agencées pour déformer l'interface de sorte que l'interface présente une épaisseur avec une valeur comprise dans la gamme de valeurs données,
et **en ce que** :
- les moyens d'emboîtage élastique comportent des éléments (20) élastiquement déformables, agencés pour pénétrer dans l'orifice de la tôle (1) ;
- l'épaisseur constante de la tôle (1) a une valeur située en deçà de la gamme de valeurs données ;
- les zones embouties (10) sont agencées pour déformer l'interface de sorte que :
l'interface comporte des motifs saillants et des motifs creux, et
les éléments (20) élastiquement déformables reposent sur les motifs saillants lorsque l'agrafe (2) est fixée dans l'orifice de la tôle (1).

2. Ensemble de fixation, comportant :
- un élément de carrosserie d'un véhicule, comprenant une tôle (1) possédant un orifice ; la tôle (1) présentant une épaisseur constante ;
- une agrafe (2), comprenant des moyens d'emboîtage élastique agencés pour fixer l'agrafe (2) dans l'orifice de la tôle (1), l'agrafe (2) étant destinée à recevoir une batterie ;
la tôle (1) présentant une interface, en contact avec l'agrafe (2) lorsque l'agrafe (2) est fixée dans l'orifice de la tôle (1), l'interface étant destinée à présenter une épaisseur avec une valeur comprise dans une gamme de valeurs données ;
**caractérisé en ce que** :
- l'épaisseur constante de la tôle (1) a une valeur située en dehors de la gamme de valeurs données ;
- la tôle (1) comporte des zones embouties (10) agencées pour déformer l'interface de sorte que l'interface présente une épaisseur avec une valeur comprise dans la gamme de valeurs données,
et **en ce que** :
- les moyens d'emboîtage élastique comportent des éléments (20) élastiquement déformables, agencés pour pénétrer dans l'orifice de la tôle (1) ;
- l'épaisseur constante de la tôle (1) a une valeur située au-delà de la gamme de valeurs données ;
- les zones embouties (10) sont agencées pour déformer l'interface de sorte que :
l'interface comporte des motifs saillants et des motifs creux, et
les éléments (20) élastiquement déformables reposent sur les motifs creux lorsque l'agrafe (2) est fixée dans l'orifice de la tôle (1).

3. Ensemble de fixation selon l'une des revendications 1 à 2, dans lequel les moyens d'emboîtage élastique comportent :
- des ergots (20) élastiquement déformables, agencés pour pénétrer dans l'orifice de la tôle (1) ;
- des pattes (21) élastiquement déformables, agencées pour venir en appui contre la tôle (1).

4. Ensemble de fixation selon l'une des revendications 1 à 3, comportant une batterie montée sur l'agrafe (2), la batterie étant de préférence une batterie pour alimenter un boîtier de télécommunication.

5. Ensemble de fixation selon l'une des revendications 1 à 4, dans lequel l'épaisseur constante de la tôle (1) a une valeur supérieure ou égale à 0,65 mm et inférieure ou égale à 2,8 mm.

6. Ensemble de fixation selon l'une des revendications 1 à 5, dans lequel la gamme de valeurs données présente :
- une borne inférieure égale à 1,35 mm, et
- une borne supérieure égale à 3 mm.

7. Véhicule, comportant un ensemble de fixation selon l'une des revendications 1 à 6.

8. Véhicule selon la revendication 7, comportant une vitre de custode ; et l'élément de carrosserie est agencé sous la vitre de custode.

## Patentansprüche

1. Befestigungsbaugruppe mit:
- einem Karosserieteil eines Fahrzeugs, bestehend aus einem Blech (1) mit einer Öffnung; das Blech (1) hat eine konstante Dicke;
- einer Klammer (2) mit elastischen Einsteckmitteln zum Befestigen der Klammer (2) in der Öffnung des Blechs (1), wobei die Klammer (2) zur Aufnahme einer Batterie bestimmt ist;
- das Blech (1) weist eine Schnittstelle auf, die mit der Klammer (2) in Kontakt steht, wenn die Klammer (2) in der Blechöffnung (1) befestigt ist, wobei die Schnittstelle dazu bestimmt ist, eine Dicke innerhalb eines vorgegebenen Wertebereichs aufzuweisen,
**dadurch gekennzeichnet, dass**:
- Die konstante Dicke des Blechs (1) liegt außerhalb des vorgegebenen Wertebereichs.
- Das Blech (1) weist geprägte Bereiche (10) auf, die so angeordnet sind, dass sie die Schnittstelle derart verformen, dass die Schnittstelle eine Dicke mit einem Wert innerhalb des vorgegebenen Wertebereichs aufweist, und dass
- Die elastischen Einsteckmittel umfassen elastisch verformbare Elemente (20), die so angeordnet sind, dass sie in die Blechöffnung (1) eindringen.
- die konstante Dicke des Blechs (1) liegt unterhalb des vorgegebenen Wertebereichs;
- Die eingeprägten Bereiche (10) sind so angeordnet, dass sie die Schnittstelle verformen, sodass:
- Die Schnittstelle vorstehende Muster und hohle Muster enthält und
- Die elastisch verformbaren Elemente (20) liegen auf den vorstehenden Mustern auf, wenn die Klammer (2) in der Blechöffnung (1) befestigt ist.

2. Befestigungsbaugruppe mit:
- Einem Karosserieteil eines Fahrzeugs, bestehend aus einem Blech (1) mit einer Öffnung; das Blech (1) hat eine konstante Dicke;
- Einer Klammer (2) mit elastischen Einsteckmitteln zum Befestigen der Klammer (2) in der Öffnung des Blechs (1), wobei die Klammer (2) zur Aufnahme einer Batterie bestimmt ist;
- Das Blech (1) weist eine Schnittstelle auf, die mit der Klammer (2) in Kontakt steht, wenn die Klammer (2) in der Blechöffnung (1) befestigt ist, wobei die Schnittstelle dazu bestimmt ist, eine Dicke innerhalb eines vorgegebenen Wertebereichs aufzuweisen,
**dadurch gekennzeichnet, dass**:
- Die konstante Dicke des Blechs (1) liegt außerhalb des vorgegebenen Wertebereichs.
- Das Blech (1) weist geprägte Bereiche (10) auf, die so angeordnet sind, dass sie die Schnittstelle derart verformen, dass die Schnittstelle eine Dicke mit einem Wert innerhalb des vorgegebenen Wertebereichs aufweist, und dass
- Die elastischen Einsteckmittel umfassen elastisch verformbare Elemente (20), die so angeordnet sind, dass sie in die Blechöffnung (1) eindringen.
- Die konstante Dicke des Blechs (1) liegt über dem vorgegebenen Wertebereich;
- Die eingeprägten Bereiche (10) sind so angeordnet, dass sie die Schnittstelle verformen, sodass:
- die Schnittstelle vorstehende Muster und hohle Muster enthält und
- Die elastisch verformbaren Elemente (20) liegen auf den Hohlmustern auf, wenn die Klammer (2) in der Blechöffnung (1) befestigt ist.

3. Befestigungsanordnung nach einem der Ansprüche 1 bis 2, bei der die elastischen Einsteckmittel umfassen:
- elastisch verformbare Stifte (20), die so angeordnet sind, dass sie in die Blechöffnung (1) eindringen
- elastisch verformbare Laschen (21) zur Anlage an dem Blech (1).

4. Befestigungsanordnung nach einem der Ansprüche 1 bis 3 mit einer an der Klammer (2) angebrachten Batterie, wobei die Batterie vorzugsweise eine Batterie zur Versorgung eines Telekommunikationsgehäuses ist.

5. Befestigungsanordnung nach einem der Ansprüche 1 bis 4, bei der die konstante Dicke des Blechs (1) einen Wert größer oder gleich 0,65 mm und kleiner oder gleich 2,8 mm aufweist.

6. Befestigungsanordnung nach einem der Ansprüche 1 bis 5, bei der der gegebene Wertebereich aufweist:
- einem unteren Grenzwert von 1,35 mm und
- einer oberen Klemme von 3 mm.

7. Fahrzeug mit einer Befestigungsvorrichtung nach einem der Ansprüche 1 bis 6.

8. Fahrzeug nach Anspruch 7, das eine Unterschenkelscheibe aufweist; und das Karosserieteil unter der Unterschenkelscheibe angeordnet ist.

## Claims

1. Fastening assembly, comprising:
- a bodywork component of a vehicle, comprising a sheet metal (1) having an orifice; the sheet metal (1) having a constant thickness;
- clip (2), comprising elastic nesting means arranged to fix the clip (2) in the orifice of the sheet (1), the clip (2) being intended for a battery;
- the sheet (1) having an interface, in contact with the clip (2) when the clip (2) is fixed in the orifice of the sheet (1), the interface being intended to have a thickness with a value comprised in a process sheet of given values;
**characterised in that**:
- the constant thickness of the sheet (1) has a value outside the process sheet of given values;
- the sheet (1) comprises stamped zones (10) arranged to distort the interface so that the interface has a thickness with a value comprised in the process sheet of given values, and **in that**:
- the elastic nesting means comprise elastically deformable items (20) arranged to penetrate into the orifice of the sheet (1);
- the constant thickness of the sheet (1) has a value below the process sheet of given values;
- the stamped zones (10) are arranged to deform the interface so that:
- the interface comprises projecting reasons and hollow reasons, and
- the elastically deformable items (20) rest on the projecting reasons when the clip (2) is fixed in the orifice of the sheet (1).

2. Fastening assembly, comprising:
- a bodywork component of a vehicle, comprising a sheet metal (1) having an orifice; the sheet metal (1) having a constant thickness;
- clip (2), comprising elastic nesting means arranged to fix the clip (2) in the orifice of the sheet (1), the clip (2) being intended for a battery;
- the sheet (1) having an interface, in contact with the clip (2) when the clip (2) is fixed in the orifice of the sheet (1), the interface being intended to have a thickness with a value comprised in a process sheet of given values;
**characterised in that**:
- the constant thickness of the sheet (1) has a value outside the process sheet of given values;
- the sheet (1) comprises stamped zones (10) arranged to distort the interface so that the interface has a thickness with a value comprised in the process sheet of given values, and **in that**:
- the elastic nesting means comprise elastically deformable items (20) arranged to penetrate into the orifice of the sheet (1);
- the constant thickness of the sheet (1) has a value beyond the process sheet of given values;
- the stamped zones (10) are arranged to deform the interface so that:
- the interface comprises projecting reasons and hollow reasons, and
- the elastically deformable items (20) rest on the hollow reasons when the clip (2) is fixed in the orifice of the sheet (1).

3. Fastening assembly according to one of claims 1 to 2, in which the elastic nesting means comprise:
- elastically deformable lugs (20) arranged to penetrate into the orifice of the sheet (1);
- elastically deformable tabs (21), arranged to bear against the sheet (1).

4. Fastening assembly according to one of claims 1 to 3, comprising a battery mounted on the clip (2), the battery preferably being a battery for powering a telecommunication box.

5. Fastening assembly according to one of claims 1 to 4, in which the constant thickness of the sheet (1) has a value greater than or equal to 0.65 mm and less than or equal to 2.8 mm.

6. Fastening assembly according to one of claims 1 to 5, in which the process sheet of given values has:
- lower limit equal to 1.35 mm, and
- an upper limit equal to 3 mm.

7. Vehicle, comprising a fastening assembly according to one of claims 1 to 6.

8. Vehicle according to claim 7, comprising a quarter window; and the bodywork element is arranged under the quarter window.
